(19) Europäisches Patentamt
European Patent Office
Office européen des brevets

(11) **EP 2 334 527 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(21) Anmeldenummer: **09784037.5**

(22) Anmeldetag: **15.10.2009**

(51) Int Cl.:
*B60T 8/1755* (2006.01) *B60W 30/02* (2012.01)
*B60W 10/18* (2012.01) *B60W 10/20* (2006.01)
*B60W 10/22* (2006.01) *B60W 10/04* (2006.01)

(86) Internationale Anmeldenummer:
**PCT/EP2009/063509**

(87) Internationale Veröffentlichungsnummer:
**WO 2010/043686 (22.04.2010 Gazette 2010/16)**

(54) **FAHRDYNAMIKREGELSYSTEM FÜR FAHRZEUGE**

DYNAMIC DRIVE CONTROL SYSTEM FOR VEHICLES

SYSTÈME DE RÉGULATION DE LA DYNAMIQUE DE CONDUITE POUR VÉHICULES AUTOMOBILES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.10.2008 DE 102008052202**

(43) Veröffentlichungstag der Anmeldung:
**22.06.2011 Patentblatt 2011/25**

(73) Patentinhaber: **Continental Teves AG & Co. oHG 60488 Frankfurt (DE)**

(72) Erfinder:
• LAUER, Peter
  61184 Karben (DE)
• RASTE, Thomas
  61440 Oberursel (DE)
• BAUER, Roger
  63303 Dreieich (DE)

(56) Entgegenhaltungen:
WO-A-2004/101337 WO-A-2006/077255
DE-A1- 10 226 683 US-A1- 2005 228 565
US-B1- 6 721 636

**Beschreibung**

Die vorliegende Erfindung betrifft ein Fahrdynamikregelsystem für Fahrzeuge, mit mindestens einem Fahrdynamikregler, dem einerseits Sollvorgaben und andererseits Fahrzustandsgrößen als Eingangsdaten zugeführt werden, und mehreren steuer- bzw. regelbaren Aktuatoren, die die Dynamik des Fahrzeugs modifizieren, wie eine fahrerunabhängig verstellbare Lenkung an einer Vorder- und/oder Hinterachse des Fahrzeugs, ein fahrerunabhängig verstellbares Fahrwerk, eine fahrerunabhängig verstellbare Bremse und einen fahrerunabhängig verstellbaren Antriebsstrang, wobei der Fahrdynamikregler aus den Sollvorgaben und den Fahrzustandsgrößen eine zentrale Regelvorgabe ermittelt und einem Verteilungsalgorithmus zuführt, der die Regelvorgabe in Stellgrößen zur Ansteuerung der Aktuatoren verteilt, wobei dem Verteilungsalgorithmus der Zustand der Aktuatoren zugeführt wird, um bei der Erstellung der Stellgrößen das aktuelle Stellpotenzial und die aktuelle Stellgeschwindigkeit der Aktuatoren und deren möglicher Beitrag zur Umsetzung der Regelvorgabe zu berücksichtigen.

Aktive, elektronisch ansteuerbare Fahrwerks- und Antriebsstrangkomponenten mit unabhängig ansteuerbaren Aktuatoren halten zunehmend Einzug in die moderne Automobiltechnik, da mit ihrer Hilfe das Fahrverhalten eines Kraftfahrzeugs gezielt beeinflusst werden kann. Ein Fahrdynamikregelsystem steht nunmehr vor der Aufgabe, die von ihm berechneten Stabilisierungseingriffe als Regelvorgabe auf ein oder mehrere Aktuatoren aufteilen zu müssen.

Aus dem Stand der Technik sind Systeme bekannt, die in Koexistenz mit anderen Systemen selbstständig das Fahrverhalten eines Kraftfahrzeugs beeinflussen, indem jedes System denjenigen Aktuator ansteuert, für den es zuständig ist. In diesem Fall gibt es keinen integrierten Fahrdynamikregler, sondern einzelne Regelsysteme, die unabhängig voneinander versuchen, durch Ansteuerung eines Aktuators ein gewünschtes Fahrverhalten zu erzielen.

Bei Systemen mit einem zentralen Fahrdynamikregler sind aus dem Stand der Technik regelbasierte Aufteilungsalgorithmen der Regelvorgabe des Fahrdynamikreglers bekannt. Entweder wird die Aufteilung der Regelvorgabe des Fahrdynamikreglers auf die Stellgrößen der Aktuatoren über empirisch ermittelte Verteilungsfaktoren oder über eine sequenzielle Verkettung der einzelnen Stellgrößen vorgenommen. Bei einem Verfahren mit empirisch ermittelten Verteilungsfaktoren erfolgt die Festlegung der Verteilungsfaktoren für gewöhnlich in Simulationsstudien oder direkt durch Versuchsreihen im Fahrzeug. Eine sequenzielle Verkettung berücksichtigt außerdem die Tatsache, dass die Aktuatoren unterschiedlichen Komfortansprüchen genügen. Daher werden bei der sequenziellen Verkettung zunächst diejenigen Aktuatoren berücksichtigt, die am komfortabelsten die Stellanforderung umsetzen können. Wenn deren Potenzial nicht ausreicht, kommen die unkomfortableren Aktuatoren zum Einsatz.

Aus der DE 102 26 683 A1 ist ein Fahrdynamikregelsystem der eingangs genannten Gattung bekannt. Das vorbekannte Fahrdynamikregelsystem beeinflusst das Fahrverhalten eines Fahrzeugs dahingehen, dass die Fahrstabilität und damit den Fahrkomfort für den Fahrer zu erhöhen. Dazu werden das Fahrwerksystem, das Lenksystem und/oder das Bremssystem nacheinander angesteuert, wobei die durch die Ansteuerung erzielte Wirkung auf das Fahrverhalten des in der Reihenfolge vorstehenden Systems berücksichtigt wird.

Aus der WO2004/101337 A1 ist ein Fahrdynamikregelsystem für Fahrzeuge bekannt, das eine Signalverteilung aufweist, der Fahrzeugdaten, Umweltdaten und Daten bzgl. des Fahrerwunsches als Eingangsdaten zugeführt werden. Dabei sind mehrere steuer- bzw. regelbare Subsysteme, die die Dynamik des Fahrzeugs modifizieren, wie eine fahrerunabhängig verstellbare Lenkung, ein fahrerunabhängig verstellbares Fahrwerk, eine fahrerunabhängig verstellbare Bremse und einen fahrerunabhängig verstellbaren Antriebsstrang vorgesehen. Bei dem vorbekannten Fahrdynamikregelsystem werden die Daten der Signalverteilung einer zentralen Ermittlungseinheit zugeführt und die zentrale Ermittlungseinheit ermittelt aus den Daten der Signalverteilung ein zentrales Regelziel. Das zentrale Regelziel wird einer zentralen Stellgrößenverteilung bzw. einem zentralen Fahrzustandsregler zugeführt, der in einer interaktiven Kommunikation mit den Subsystemen diese Subsysteme derart ansteuert, dass das Regelziel von den Subsystemen am Fahrzeug umgesetzt wird. Das Verfahren ist allerdings im Normalfahrbereich und im fahrdynamischen Grenzbereich weniger geeignet.

Der Erfindung liegt daher die Aufgabe zugrunde, ein Fahrdynamikregelsystem der eingangs genannten Gattung dahingehend zu verbessern, dass die Fahreigenschaften eines Kraftfahrzeugs in Bezug auf Längs-, Quer- und Vertikaldynamik verbessert werden.

Diese Aufgabe wird durch die Merkmale des Anspruchs 1 gelöst. Dabei ist ein Fahrdynamikregelsystem zur optimalen Aufteilung von Stellgrößen der Aktuatoren auf beliebige aktive Fahrwerkskomponenten notwendig. Dem Verteilungsalgorithmus wird der Zustand der Aktuatoren zugeführt, um bei der Erstellung der Stellgrößen das aktuelle Stellpotenzial und die aktuelle Stellgeschwindigkeit der Aktuatoren und deren möglicher Beitrag zur Umsetzung der Regelvorgabe zu berücksichtigen. Es ist vorgesehen, dass der Verteilungsalgorithmus eine Matrix enthält, mit der die Stellgrößen multipliziert werden, um die Regelvorgabe zu erhalten, wobei die Matrix für jeden Arbeitspunkt das aktuelle Stellpotenzial der Aktuatoren enthält, um eine optimale Verteilung der Regelvorgabe in die Stellgrößen der Aktuatoren zu gewährleisten.

Vorteilhafte Weiterbildungen sind den Unteransprüchen entnehmbar.

Die Regelvorgaben des Fahrdynamikreglers bestehen aus physikalischen Größen der Längs-, Quer- und Vertikaldynamik und ist eine vektorielle Funktion der Fahrzustandsgrößen und der Stellgrößen der Aktuatoren. Bei einer besonders vorteilhaften Weiterbildung ist vorgesehen, dass der Verteilungsalgorithmus die Abweichung zwischen der Regelvorgaben des Fahrdynamikreglers und der Stellgrößen minimiert, um das Fahrverhalten eines Kraftfahrzeugs sowohl im Normalfahrbereich als auch im fahrdynamischen Grenzbereich zu verbessern.

Zur Minimierung der Abweichung zwischen der Regelvorgaben und der Stellgrößen findet folgendes Gleichungssystem Anwendung:

$$\min_{\underline{u}} J = \gamma \parallel W_v (B\underline{u} - \underline{v}) \parallel + \parallel W_u (\underline{u} - \underline{u}_d) \parallel$$

$$\underline{u}_{min} <= \underline{u} <= \underline{u}_{max} \; ; \; \underline{\dot{u}}_{min} <= \underline{\dot{u}} <= \underline{\dot{u}}_{max}$$

$$\dim(B) = (m \times n); \dim(\underline{u}) = (m \times 1); \dim(\underline{v}) = (n \times 1)$$

Dabei ist die vorhin genannte Matrix als Jacobi-Matrix ausgebildet, deren Einträge aus partiellen Ableitungen der vektoriellen Funktion der Fahrzustandsgrößen und der Stellgrößen der Aktuatoren gebildet werden, wobei die Matrix mit Hilfe der folgenden Beziehung bestimmt wird: $B = \left( \dfrac{\partial g_i}{\partial u_j} \right)_{i=1,\dots,n; j=1,\dots,m}$

Für eine Regelvorgabe bestehend aus der physikalischen Größe des Giermoments berechnet und verteilt der Verteilungsalgorithmus einen Zusatzlenkwinkel für eine Vorderradlenkung, einen Zusatzlenkwinkel für eine Hinterradlenkung, sowie einen Verteilungsparameter für die Aufteilung der Wankabstützungskräfte auf zwei Stabilisatoren des fahrerunabhängig betätigbaren Fahrwerks.

Für eine Regelvorgabe bestehend aus den physikalischen Größen der globalen Längskraft, der globalen Querkraft und des globalen Giermoments berechnet und verteilt der Verteilungsalgorithmus einen Lenkwinkel für die Vorderradlenkung, ein Lenkwinkel für die Hinterradlenkung und individuelle Radbrems- bzw. Radantriebsmomente sowie einen Verteilungsparameter für die Aufteilung der Wankabstützungskräfte auf die beiden Stabilisatoren des fahrerunabhängig betätigbaren Fahrwerks.

Die Erfindung wird nachfolgend anhand zweier Ausführungsbeispiele im Zusammenhang mit der beiliegenden Zeichnung näher erläutert. In der Zeichnung zeigen:

Fig. 1    eine vereinfachte Darstellung der grundsätzlichen Struktur des erfindungsgemäßen Fahrdynamikregelsystems;

Fig. 2    eine schematische Darstellung des verwendeten Fahrzeugmodells für die Berechnung des Giermoments;

Fig. 3    ein Diagramm des verwendeten Reifenmodells, bei dem die Seitenkraft gegen einen Schräglaufwinkel für verschiedene Aufstandskräfte bei festem Reibwert dargestellt sind und

Fig. 4    eine schematische Darstellung der Einflussparameter auf den erfindungsgemäßen Verteilungsalgorithmus.

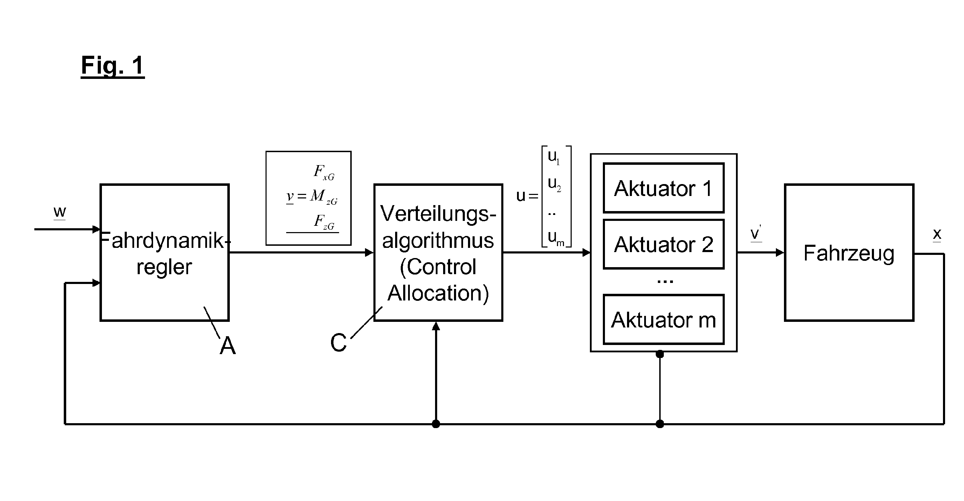

Das Fahrdynamikregelsystem ist in seiner Grundstruktur in Fig. 1 als Regelkreis dargestellt. Ein Fahrdynamikregler A berechnet aus einer Sollvorgabe $\underline{w}$ und einer Fahrzustandsgröße $\underline{x}$ eine Regelvorgabe $\underline{v}$ des Fahrdynamikreglers. Wie es in Fig. 1 dargestellt ist, enthält die Regelvorgabe $\underline{v}$ des Fahrdynamikreglers im Falle einer Längs-, Quer- und Vertikaldynamik die drei globalen Kraftkomponenten $F_{xG}$, $M_{zG}$ und $F_{zG}$. Die Kraftkomponente $F_{xG}$ bezeichnet dabei die Längskraft des Kraftfahrzeugs, während die Kraftkomponente $M_{zG}$ das Giermoment und die Kraftkomponente $F_{zG}$ die Abstützkraft des Fahrzeugaufbaus bezeichnet. Weitere Komponenten, wie beispielsweise die Querkraft des Kraftfahrzeugs $F_{yG}$, das Längsmoment $M_{xG}$ oder das Quermoment $M_{yG}$, können bei Bedarf hinzugefügt werden. Je nach Anwendungsfall dienen die Stellgrößen der Stabilisierung des Kraftfahrzeugs im fahrdynamischen Grenzbereich oder der Erhöhung der Fahrzeugagilität im Normalfahrbereich.

Der in dieser Erfindung beschriebene Verteilungsalgorithmus C teilt die Regelvorgabe $\underline{v}$ des Fahrdynamikreglers A gemäß der in Gleichung I angegebenen Optimierungsfunktion auf die Aktuatoren 1 bis m auf und erstellt für diese die entsprechenden Stellgrößen $\underline{u}$. Hierzu ist ein unterbestimmtes Gleichungssystem mit Nebenbedingungen für den Stellbereich und die Stellgeschwindigkeit der Aktuatoren 1 bis m mit Hilfe der Methode der kleinsten Fehlerquadrate zu lösen:

$$\min_{\underline{u}} J = \gamma \parallel W_v \left( B\underline{u} - \underline{v} \right) \parallel + \parallel W_u \left( \underline{u} - \underline{u}_d \right) \parallel$$

$$\underline{u}_{min} <= \underline{u} <= \underline{u}_{max} \; ; \; \underline{\dot{u}}_{min} <= \underline{\dot{u}} <= \underline{\dot{u}}_{max}$$

$$\dim(B) = (m x n); \dim(\underline{u}) = (m x 1); \dim(\underline{v}) = (n x 1) \qquad (I)$$

Im ersten Summanden beschreibt die Funktion die Abweichung zwischen der Regelvorgabe **_v_** und den Stellgrößen **_u_**. Um die Stellgrößen **_u_** mit der Regelvorgabe **_v_** vergleichen zu können, werden sie mit der (m x n)-Matrix B multipliziert. Die Matrix B stellt einen linearen Zusammenhang zwischen den physikalischen Stellgrößen der Aktuatoren und der Regelvorgabe **_v_**, die vom Fahrdynamikregler A berechnet wurde, her. Die Matrix B beschreibt somit das linearisierte Aktuatorpotenzial im aktuellen Arbeitspunkt. Der Verteilungsalgorithmus C versucht nun die Abweichung zwischen den Stellgrößen **_u_** und der Regelvorgabe **_v_** zu minimieren. Über die Gewichtungsmatrix $W_v$ können die Regelvorgaben **_v_** einzelnen gewichtet werden.

Unter der Annahme, dass sich die Regelvorgabe **_v_** und die Stellgrößen **_u_** über die Vektorfunktion

$$\underline{g} : \Re^m \longrightarrow \Re^n \text{ gemäß}$$

$$\underline{v} = \underline{g}(\underline{x}, \underline{u}) \qquad (II)$$

abbilden lassen, kann die Matrix B als Jacobi-Matrix über folgende Beziehung berechnet werden:

$$B = \left( \frac{\partial g_i}{\partial u_j} \right)_{i=1,\dots,n; j=1,\dots,m} \qquad (III)$$

Das folgende Ausführungsbeispiel zeigt die Regelung der Querdynamik eines Kraftfahrzeugs unter Anwendung des zuvor beschriebenen Verfahrens. Betrachtet wird ein Fahrzeug mit folgenden aktiven, elektronisch ansteuerbaren Fahrwerkskomponenten: Vorderradlenkung mit Winkelüberlagerung, Hinterradlenkung und Wankstabilisator. Dabei berechnet Verteilungsalgorithmus C für eine Regelvorgabe **_v_** bestehend aus der physikalischen Größe des Giermoments $M_{zG}$ einen Zusatzlenkwinkel für eine Vorderradlenkung $\Delta\delta_v$, einen Zusatzlenkwinkel für eine Hinterradlenkung $\Delta\delta_h$, sowie einen Verteilungsparameter $\lambda$ für die Aufteilung der Wankabstützungskräfte auf zwei Stabilisatoren des fahrerunabhängig betätigbaren Fahrwerks und verteilt diese entsprechen.

Als Regelvorgabe **_v_** wird das Giermoment $M_{zG}$ betrachtet. Die Stellgrößen der Aktuatoren sind ein Zusatzlenkwinkel für die Vorderradlenkung $\Delta\delta_v$, ein Zusatzlenkwinkel für die Hinterradlenkung $\Delta\delta_h$, sowie ein Verteilungsparameter $\lambda$ für die Aufteilung der Wankabstützungskräfte auf die beiden Stabilisatoren.

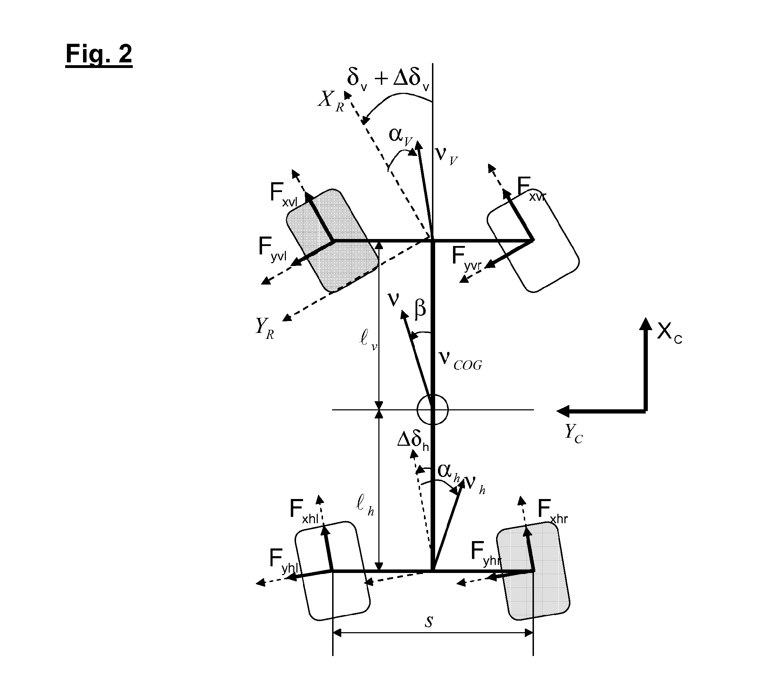

In Fig.2 ist das betrachtete Fahrzeugmodell mit den an den Rädern wirkenden Längs- und Querkräften dargestellt. Durch eine Bilanzierung der Momente lässt sich das auf das Fahrzeug wirkende Giermoment $M_{zG}$ in Abhängigkeit der Zusatzlenkwinkel $\Delta\delta_v$ und $\Delta\delta_h$ bestimmen, wie es in Gleichung IV ausgeführt ist.

$$M_{zG} = \begin{bmatrix} -\dfrac{s}{2} \\ \ell_v \end{bmatrix}^T * \begin{bmatrix} {}^C F_{xvl} \\ {}^C F_{yvl} \end{bmatrix} + \begin{bmatrix} \dfrac{s}{2} \\ \ell_v \end{bmatrix}^T * \begin{bmatrix} {}^C F_{xvr} \\ {}^C F_{yvr} \end{bmatrix} + \begin{bmatrix} -\dfrac{s}{2} \\ -\ell_h \end{bmatrix}^T * \begin{bmatrix} {}^C F_{xhl} \\ {}^C F_{yhl} \end{bmatrix} + \begin{bmatrix} \dfrac{s}{2} \\ -\ell_h \end{bmatrix}^T * \begin{bmatrix} {}^C F_{xhr} \\ {}^C F_{yhr} \end{bmatrix}$$

$$= \begin{bmatrix} -\dfrac{s}{2} \\ \ell_v \end{bmatrix}^T \cdot \begin{bmatrix} \cos(\delta_v + \Delta\delta_v) & -\sin(\delta_v + \Delta\delta_v) \\ \sin(\delta_v + \Delta\delta_v) & \cos(\delta_v + \Delta\delta_v) \end{bmatrix} \cdot \begin{bmatrix} F_{xvl} \\ F_{yvl} \end{bmatrix}$$

$$+ \begin{bmatrix} \dfrac{s}{2} \\ \ell_v \end{bmatrix}^T \cdot \begin{bmatrix} \cos(\delta_v + \Delta\delta_v) & -\sin(\delta_v + \Delta\delta_v) \\ \sin(\delta_v + \Delta\delta_v) & \cos(\delta_v + \Delta\delta_v) \end{bmatrix} \cdot \begin{bmatrix} F_{xvr} \\ F_{yvr} \end{bmatrix}$$

$$+ \begin{bmatrix} -\dfrac{s}{2} \\ -\ell_h \end{bmatrix}^T \cdot \begin{bmatrix} \cos(\Delta\delta_h) & -\sin(\Delta\delta_h) \\ \sin(\Delta\delta_h) & \cos(\Delta\delta_h) \end{bmatrix} \cdot \begin{bmatrix} F_{xhl} \\ F_{yhl} \end{bmatrix}$$

$$+ \begin{bmatrix} \dfrac{s}{2} \\ -\ell_h \end{bmatrix}^T \cdot \begin{bmatrix} \cos(\Delta\delta_h) & -\sin(\Delta\delta_h) \\ \sin(\Delta\delta_h) & \cos(\Delta\delta_h) \end{bmatrix} \cdot \begin{bmatrix} F_{xhr} \\ F_{yhr} \end{bmatrix} \qquad (\mathrm{IV})$$

Die Querkräfte $F_y$ ergeben sich aus in Gleichung V angegebenen Reifenmodell. Mit dem Modell lassen sich die Querkräfte in Abhängigkeit des Schräglaufwinkels $\alpha$, der Längskräfte $F_x$ und der Radaufstandskräfte $F_z$, sowie einiger Reifenparameter analytisch berechnen. Außerdem enthält das Reifenmodell eine von $F_z$ abhängige Schräglaufsteifigkeit $C_{\alpha 0}$.

$$F_y = \begin{cases} \left( C_{\alpha 0} F_z \alpha - sign(\alpha) \dfrac{C_{\alpha 0}{}^2 F_z{}^2}{4\mu F_z} \alpha^2 \right) \sqrt{1 - \left( \dfrac{F_x}{\mu_0 F_z} \right)^2}, & |\alpha| < \dfrac{2\mu_0}{C_{\alpha 0}} \\ sign(\alpha)\mu_0 F_z \sqrt{1 - \left( \dfrac{F_x}{\mu_0 F_z} \right)^2}, & |\alpha| \geq \dfrac{2\mu_0}{C_{\alpha 0}} \end{cases}$$

$$mit \quad C_{\alpha 0} = C_{\alpha 1} + C_{\alpha 2} * \dfrac{F_z}{F_{z0}} \qquad (\mathrm{V})$$

$$und \quad \alpha_v = \delta_v - \beta - \dfrac{\ell_v}{v}\dot\psi + \Delta\delta_v \; ; \; \alpha_h = -\beta + \dfrac{\ell_h}{v}\dot\psi + \Delta\delta_h$$

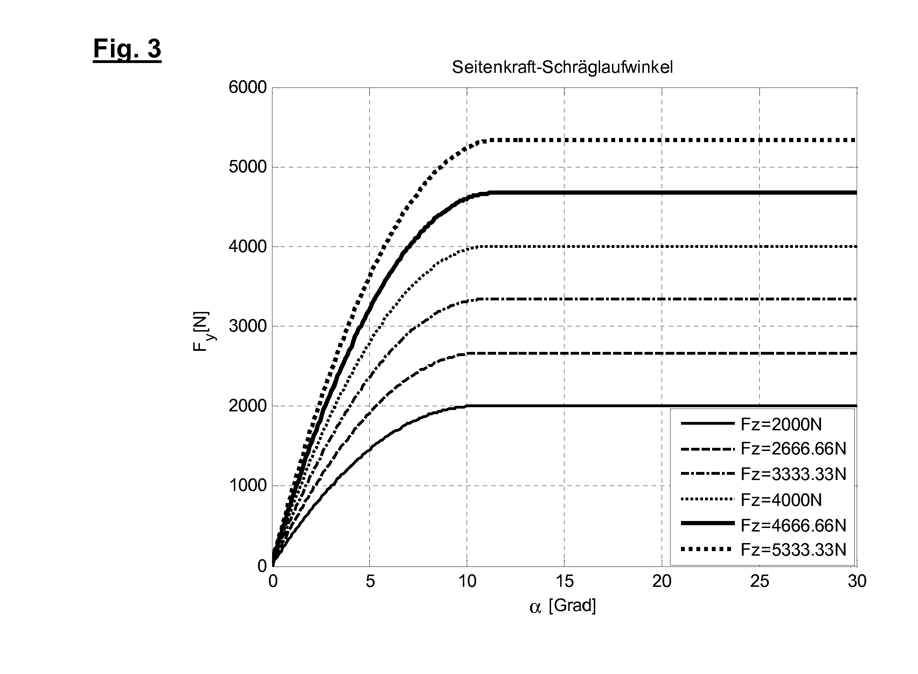

In Fig. 3 sind die Reifenkennlinien als Seitenkraft-Schräglaufwinkel-Diagramm für ausgewählte Aufstandskräfte $F_z$ und einen festen Reibwert dargestellt.

Die Längskräfte $F_x$ werden durch das beim Bremsen ausgeübte Bremsmoment und an der angetriebenen Achse zusätzlich durch das Antriebsmoment bestimmt. Sie lassen sich näherungsweise über die Gleichung VI berechnen:

$$F_x = \begin{cases} -\dfrac{P_{Rad} \cdot C_{PM}}{r_{dyn}} & \text{(nicht angetriebenes Rad)} \\[2em] \dfrac{M_{mot} \cdot i_{antrieb}}{2 \cdot r_{dyn}} - \dfrac{P_{Rad} \cdot C_{PM}}{r_{dyn}} & \text{(angetriebenes Rad)} \end{cases}$$

$$P_{Rad} = Bremsdruck \qquad\qquad\qquad\qquad (\text{VI})$$

$$C_{PM} = Umrechnungsfaktor\ Bremsdruck\ auf\ Bremsmoment$$

$$r_{dyn} = dynamischer\ Reifenhalbmesser$$

$$M_{mot} = Motordrehmoment$$

$$i_{antrieb} = \ddot{U}bersetzungsverh\ddot{a}ltnis\ des\ Antriebsstrangs$$

Der Verteilungsparameter $\lambda$ zur Aufteilung der Wankmomente auf die beiden Fahrzeugachsen wirkt sich auf die Aufstandskraft $F_z$ der einzelnen Räder wie folgt aus:

$$F_{zvl} = m \cdot g \frac{l_h}{2(l_v + l_h)} - 2 \cdot \frac{m \cdot v \cdot \dot{\psi} \cdot h \cdot \lambda}{s}$$

$$F_{zvr} = m \cdot g \frac{l_h}{2(l_v + l_h)} + 2 \cdot \frac{m \cdot v \cdot \dot{\psi} \cdot h \cdot \lambda}{s}$$

$$F_{zhl} = m \cdot g \frac{l_v}{2(l_v + l_h)} - 2 \cdot \frac{m \cdot v \cdot \dot{\psi} \cdot h \cdot (1 - \lambda)}{s}$$

$$F_{zhr} = m \cdot g \frac{l_v}{2(l_v + l_h)} + 2 \cdot \frac{m \cdot v \cdot \dot{\psi} \cdot h \cdot (1 - \lambda)}{s}$$

$$m = Fahrzeugmasse$$

$$g = Gravitationskonstante \qquad\qquad (\text{VII})$$

$$v = Fahrzeug(l\ddot{a}ngs\text{-})geschwindigkeit$$

$$h = Schwerpunktsh\ddot{o}he$$

$$s = Spurweite$$

$$l_v = Abstand\ Schwerpunkt\ zu\ Vorderachse$$

$$l_h = Abstand\ Schwerpunkt\ zu\ Vorderachse$$

$$\dot{\psi} = Gierrate$$

Der Verteilungsparameter $\lambda$ bewegt sich in dem Bereich zwischen 0 und 1, wobei der Wert $\lambda$=**0** bedeutet, dass das gesamte Wankmoment von der Hinterachse aufgebracht wird. Entsprechend wird beim Wert $\lambda$=**1** das gesamte Wankmoment über die Vorderachse abgestützt.

Setzt man die Gleichungen V, VI und VII in Gleichung IV ein, so erhält man eine geschlossene Darstellung zwischen dem virtuellen Giermoment $M_{zG}$ und den Aktuatorstellgrößen $\Delta\delta_v$, $\Delta\delta_h$ und $\lambda$. Analog zu Gleichung II ergibt sich folgender Zusammenhang:

$$\underline{v} = M_{zG} = \underline{g}(\Delta\delta_v, \Delta\delta_h, \lambda) \qquad (\text{VIII})$$

Nach der Berechnung der B-Matrix entsprechend Gleichung III kann der in Gleichung I angegebene Optimierungsalgorithmus direkt angewendet und die optimalen Stellgrößen berechnet werden.

Bei einem zweiten Ausführungsbeispiel werden als Regelvorgabe die globale Längskraft, die Querkraft und das Giermoment verwendet. Das zweite Ausführungsbeispiel zeigt die Regelung der Querdynamik eines Kraftfahrzeugs unter Anwendung des zuvor beschriebenen Verfahrens. Betrachtet wird ein Fahrzeug mit folgenden aktiven, elektronisch ansteuerbaren Fahrwerkskomponenten: Vorderradlenkung mit Winkel-Schnittstelle, Hinterradlenkung, Wankstabilisator und Bremssystem mit Radmomenten-Schnittstelle oder alternativ ein System mit Überwachung der Raddrehmomente oder mit Radnabenmotoren. Für eine Regelvorgabe $\underline{v}$ bestehend aus der physikalischen Größe der globalen Längskraft $F_{xG}$, der globalen Querkraft $F_{yG}$ und des globalen Giermoments $M_{zG}$ berechnet der Verteilungsalgorithmus C einen Lenkwinkel für die Vorderradlenkung $\Delta\delta_v$, ein Lenkwinkel für die Hinterradlenkung $\Delta\delta_h$ und individuelle Radbrems- bzw. Radantriebsmomente $M_{Rad,\,vl}$, $M_{Rad,\,vr}$, $M_{Rad,\,hl}$, $M_{Rad,\,hr}$ sowie einen Verteilungsparameter $\lambda$ für die Aufteilung der Wankabstützungskräfte auf die beiden Stabilisatoren des fahrerunabhängig betätigbaren Fahrwerks.

Für Stellgrößen $\underline{u}$ und Regelvorgabe $\underline{v}$ ergibt sich folgender Zusammenhang:

$$
\underline{u} = \begin{bmatrix} u_1 \\ u_2 \\ u_3 \\ u_4 \\ u_5 \\ u_6 \\ u_7 \end{bmatrix} = \begin{bmatrix} \Delta\delta_v \\ \Delta\delta_h \\ M_{Rad,vl} \\ M_{Rad,vr} \\ M_{Rad,hl} \\ M_{Rad,hr} \\ \lambda \end{bmatrix}, \underline{v} = \begin{bmatrix} F_{xG} \\ F_{yG} \\ M_{zG} \end{bmatrix} = \begin{bmatrix} g_1(\underline{u}) \\ g_2(\underline{u}) \\ g_3(\underline{u}) \end{bmatrix}, \qquad (\text{IX})
$$

Die globalen Kräfte bzw. Momente bestimmen sich für ein ebenes Fahrzeugmodell aus den Gleichungen

$$
\begin{aligned}
F_{xG} =\ & (F_{x,vl} + F_{x,vr})\cos(\delta_v + \Delta\delta_v) - (F_{y,vl} + F_{y,vr})\sin(\delta_v + \Delta\delta_v) \\
& + (F_{x,hl} + F_{x,hr})\cos(\Delta\delta_h) - (F_{y,hl} + F_{y,hr})\sin(\Delta\delta_h) \\[4pt]
F_{yG} =\ & (F_{x,vl} + F_{x,vr})\sin(\delta_v + \Delta\delta_v) + (F_{y,vl} + F_{y,vr})\cos(\delta_v + \Delta\delta_v) \\
& + (F_{x,hl} + F_{x,hr})\sin(\Delta\delta_h) - (F_{y,hl} + F_{y,hr})\cos(\Delta\delta_h) \\[4pt]
M_{zG} =\ & F_{x,vl}\left(-\tfrac{s}{2}\cos(\delta_v + \Delta\delta_v) + l_v\sin(\delta_v + \Delta\delta_v)\right) + F_{y,vl}\left(\tfrac{s}{2}\sin(\delta_v + \Delta\delta_v) + l_v\cos(\delta_v + \Delta\delta_v)\right) \\
& + F_{x,vr}\left(\tfrac{s}{2}\cos(\delta_v + \Delta\delta_v) + l_v\sin(\delta_v + \Delta\delta_v)\right) + F_{y,vr}\left(-\tfrac{s}{2}\sin(\delta_v + \Delta\delta_v) + l_v\cos(\delta_v + \Delta\delta_v)\right) \\
& + F_{x,hl}\left(-\tfrac{s}{2}\cos(\Delta\delta_h) - l_h\sin(\Delta\delta_h)\right) + F_{y,hl}\left(\tfrac{s}{2}\sin(\Delta\delta_h) - l_h\cos(\Delta\delta_h)\right) \\
& + F_{x,hr}\left(\tfrac{s}{2}\cos(\Delta\delta_h) - l_h\sin(\Delta\delta_h)\right) + F_{y,hr}\left(-\tfrac{s}{2}\sin(\Delta\delta_h) - l_h\cos(\Delta\delta_h)\right)
\end{aligned}
\qquad (\text{X})
$$

Die Querkräfte Fy in Gleichung X ergeben sich aus dem in Gleichung V angegebenen Reifenmodell. Für $F_x$ in Gleichung V und Gleichung X wird der Zusammenhang:

$$
F_{x,i} = \frac{M_{Rad,i}}{r_{dyn}} \qquad (\text{XI})
$$

verwendet. Bei den Nebenbedingungen in Gleichung I können noch die sich aus dem Kamm'schen Kreis ergebenden Ungleichungen

$$
-\left|k\mu_0 F_{z,i}\right| \le \frac{M_{Rad,i}}{r_{dyn}} \le 0 \qquad (\text{XII})
$$

mit dem Applikationsparameter k, dem Reibwert $\mu_0$ und den Aufstandskräften aus Gleichung VII ergänzt werden. Die Jacobi-Matrix B ergibt sich entsprechend Gleichung III zu

$$B = \begin{bmatrix} \dfrac{\partial g_1}{\partial u_1} & \dfrac{\partial g_1}{\partial u_2} & \dfrac{\partial g_1}{\partial u_3} & \dfrac{\partial g_1}{\partial u_4} & \dfrac{\partial g_1}{\partial u_5} & \dfrac{\partial g_1}{\partial u_6} & \dfrac{\partial g_1}{\partial u_7} \\[2ex] \dfrac{\partial g_2}{\partial u_1} & \dfrac{\partial g_2}{\partial u_2} & \dfrac{\partial g_2}{\partial u_3} & \dfrac{\partial g_2}{\partial u_4} & \dfrac{\partial g_2}{\partial u_5} & \dfrac{\partial g_2}{\partial u_6} & \dfrac{\partial g_2}{\partial u_7} \\[2ex] \dfrac{\partial g_3}{\partial u_1} & \dfrac{\partial g_3}{\partial u_2} & \dfrac{\partial g_3}{\partial u_3} & \dfrac{\partial g_3}{\partial u_4} & \dfrac{\partial g_3}{\partial u_5} & \dfrac{\partial g_3}{\partial u_6} & \dfrac{\partial g_3}{\partial u_7} \end{bmatrix} \qquad (XIII)$$

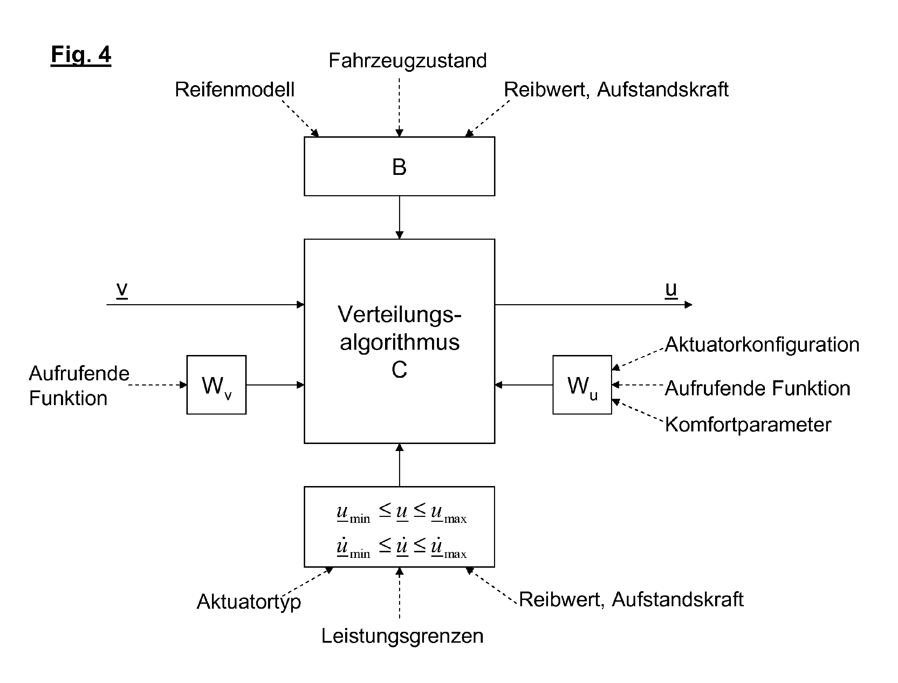

Zur Verdeutlichung ist in Fig. 4 der Einfluss der Eingangsparameter erfindungsgemäßen Verteilungsalgorithmus C schematisch dargestellt. Dem Verteilungsalgorithmus C wird die Regelvorgabe _**v**_ zugeführt und der Verteilungsalgorithmus C erstellt die Stellgrößen _**u**_ unter Berücksichtigung der Aktuatorzustände, um deren aktuelles Stellpotenzial, deren aktuelle Stellgeschwindigkeit und deren möglicher Beitrag zur Umsetzung der Regelvorgabe _**v**_ zu berücksichtigen. Der Verteilungsalgorithmus C weist die Matrix B auf, mit der die Stellgrößen _**u**_ multipliziert werden, um die Regelvorgabe _**v**_ zu erhalten. In die Matrix B fließen dabei Erkenntnisse des Reifenmodells, das in Gleichung V und in Fig. 3 dargestellt ist, der Fahrzustand des Kraftfahrzeugs und der Reibwert samt Aufstandskraft der Räder des Kraftfahrzeugs ein. Andererseits ist der Stellbereich und damit die Grenzen der Stellgrößen _**u**_ und deren Geschwindigkeit vom angesteuerten Aktuatortyp, von den Leistungsgrenzen des angesteuerten Aktuatortyps und wiederum vom Reibwert samt Aufstandskraft der Räder des Kraftfahrzeugs abhängig.

Wie es in Fig. 4 weiter verdeutlich ist, wird der Verteilungsalgorithmus C von der Gewichtungsmatrix $W_v$ der Regelvorgabe _**v**_ beeinflusst, wobei die Gewichtungsmatrix $W_v$ abhängig von der aufrufenden Funktion ist. Die Gewichtungsmatrix $W_U$ der Stellgrößen _**u**_ ist abhängig von der aufrufenden Funktion, der Aktuatorkonfiguration und weitere Komfortparameter, die ein komfortables Fahren mit dem Kraftfahrzeug ermöglichen.

## Patentansprüche

1. Fahrdynamikregelsystem für Fahrzeuge, mit mindestens einem Fahrdynamikregler (A), dem einerseits Sollvorgaben (_**w**_) und andererseits Fahrzustandsgrößen (_**x**_) als Eingangsdaten zugeführt werden, und mehreren steuer- bzw. regelbaren Aktuatoren (1, ,m), die die Dynamik des Fahrzeugs modifizieren, wie eine fahrerunabhängig verstellbare Lenkung an einer Vorder- und/oder Hinterachse des Fahrzeugs, ein fahrerunabhängig verstellbares Fahrwerk, eine fahrerunabhängig verstellbare Bremse und einen fahrerunabhängig verstellbaren Antriebsstrang, wobei der Fahrdynamikregler (A) aus den Sollvorgaben (_**w**_) und den Fahrzustandsgrößen (_**x**_) eine zentrale Regelvorgabe (_**v**_) ermittelt und einem Verteilungsalgorithmus (C) zuführt, der die Regelvorgabe (_**v**_) in Stellgrößen (_**u**_) zur Ansteuerung der Aktuatoren (1, ,m) verteilt, wobei dem Verteilungsalgorithmus (C) der Zustand der Aktuatoren (1 bis m) zugeführt wird, um bei der Erstellung der Stellgrößen (_**u**_) das aktuelle Stellpotenzial und die aktuelle Stellgeschwindigkeit der Aktuatoren (1 bis m) und deren möglicher Beitrag zur Umsetzung der Regelvorgabe (_**v**_) zu berücksichtigen, **dadurch gekennzeichnet, dass** der Verteilungsalgorithmus (C) eine Matrix (B) enthält, mit der die Stellgrößen (_**u**_) multipliziert werden, um die Regelvorgabe (_**v**_) zu erhalten, wobei die Matrix (B) für jeden Arbeitspunkt das aktuelle Stellpotenzial der Aktuatoren (1 bis m) enthält, um eine optimale Verteilung der Regelvorgabe (_**v**_) in die Stellgrößen (_**u**_) der Aktuatoren (1 bis m) zu gewährleisten.

2. Fahrdynamikregelsystem nach Anspruch 1, **dadurch gekennzeichnet, dass** die Regelvorgaben (_**v**_) des Fahrdynamikreglers (A) aus physikalischen Größen der Längs-, Quer- und Vertikaldynamik bestehen.

3. Fahrdynamikregelsystem nach einem der vorhergehenden Ansprüche, **dadurch gekennzeichnet, dass** der Verteilungsalgorithmus (C) die Abweichung zwischen der Regelvorgaben (_**v**_) des Fahrdynamikreglers (A) und der Stellgrößen (_**u**_) minimiert, um das Fahrverhalten eines Kraftfahrzeugs sowohl im Normalfahrbereich als auch im fahrdynamischen Grenzbereich zu verbessern.

4. Fahrdynamikregelsystem nach Anspruch 3, **dadurch gekennzeichnet, dass** zur Minimierung der Abweichung zwischen der Regelvorgaben (_**v**_) und der Stellgrößen (_**u**_) folgendes Gleichungssystem Anwendung findet:

$$\min_{\underline{u}} J = \gamma \, \| \, W_v \left( B\underline{u} - \underline{v} \right) \| + \| \, W_u \left( \underline{u} - \underline{u}_d \right) \|$$

$$\underline{u}_{min} <= \underline{u} <= \underline{u}_{max} \; ; \; \underline{\dot{u}}_{min} <= \underline{\dot{u}} <= \underline{\dot{u}}_{max}$$

$$\dim(B) = (m \times n); \dim(\underline{u}) = (m \times 1); \dim(\underline{v}) = (n \times 1)$$

5. Fahrdynamikregelsystem nach einem der vorhergehenden Ansprüche, **dadurch gekennzeichnet, dass** die Regelvorgabe ($\underline{v}$) eine vektorielle Funktion $\underline{v}=\underline{g}(\underline{x},\underline{u})$ der Fahrzustandsgrößen ($\underline{x}$) und der Stellgrößen ($\underline{u}$) ist.

6. Fahrdynamikregelsystem nach Anspruch 1, **dadurch gekennzeichnet, dass** die Matrix (B) als Jacobi-Matrix ausgebildet ist, deren Einträge aus partiellen Ableitungen der vektoriellen Funktion $\underline{g}$ gebildet werden, wobei die Matrix (B) mit Hilfe der folgenden Beziehung bestimmt wird: $B = \left( \dfrac{\partial g_i}{\partial u_j} \right)_{i=1,\dots,n; j=1,\dots,m}$

7. Fahrdynamikregelsystem nach einem der vorhergehenden Ansprüche, **dadurch gekennzeichnet, dass** der Verteilungsalgorithmus (C) für eine Regelvorgabe ($\underline{v}$) bestehend aus der physikalischen Größe des Giermoments ($M_{zG}$) einen Zusatzlenkwinkel für eine Vorderradlenkung ($\Delta\delta_v$), einen Zusatzlenkwinkel für eine Hinterradlenkung ($\Delta\delta_h$), sowie einen Verteilungsparameter ($\lambda$) für die Aufteilung der Wankabstützungskräfte auf zwei Stabilisatoren des fahrerunabhängig betätigbaren Fahrwerks berechnet und verteilt.

8. Fahrdynamikregelsystem nach Anspruch 7, **dadurch gekennzeichnet, dass** die Berechnung mit Hilfe einer vektoriellen Funktion $\underline{v} = M_{zG} = \underline{g}(\Delta\delta_v, \Delta\delta_h, \lambda)$ erfolgt.

9. Fahrdynamikregelsystem nach einem der Ansprüche 1 bis 6, **dadurch gekennzeichnet, dass** der Verteilungsalgorithmus (C) für eine Regelvorgabe ($\underline{v}$) bestehend aus der physikalischen Größe der globalen Längskraft ($F_{xG}$), der globalen Querkraft ($F_{yG}$) und des globalen Giermoments ($M_{zG}$) einen Lenkwinkel für die Vorderradlenkung ($\Delta\delta v$), ein Lenkwinkel für die Hinterradlenkung ($\Delta\delta_h$) und individuelle Radbrems- bzw. Radantriebsmomente ($M_{Rad,vl}$, $M_{Rad, vr}$, $M_{Rad, hl}$, $M_{Rad, hr}$) sowie einen Verteilungsparameter ($\lambda$) für die Aufteilung der Wankabstützungskräfte auf die beiden Stabilisatoren des fahrerunabhängig betätigbaren Fahrwerks berechnet und verteilt.

## Claims

1. Driving dynamics control system for vehicles, comprising at least one driving dynamics controller (A) that is fed setpoint specifications ($\underline{w}$), on the one hand, and driving state variables ($\underline{x}$) on the other hand, as input data, and comprising a plurality of actuators (1, ,m) that can be controlled and/or regulated and modify the dynamics of the vehicle, such as steering, adjustable independently of the driver, on a front and/or rear axle of the vehicle, a chassis adjustable independently of the driver, a brake adjustable independently of the driver, and a drive train adjustable independently of the driver, the driving dynamics controller (A) determining a central control specification ($\underline{v}$) from the setpoint specifications ($\underline{w}$) and the driving state variables ($\underline{x}$) and feeding it to a distribution algorithm (C) that distributes the control specification ($\underline{v}$) into manipulated variables ($\underline{u}$) for driving the actuators (1, ,m), the distribution algorithm (C) being fed the state of the actuators (1 to m) in order, when generating the manipulated variables ($\underline{u}$), to take account of the current control potential and the current actuating speed of the actuators (1 to m) and their possible contribution to the implementation of the control specification ($v$), **characterized in that** the distribution algorithm (C) includes a matrix (B) with the aid of which the manipulated variables ($\underline{u}$) are multiplied in order to obtain the control specification ($v$), the matrix (B) including for each operating point the current control potential of the actuators (1 to m) in order to ensure an optimum distribution of the control specification ($\underline{v}$) into the manipulated variables ($\underline{u}$) of the actuators (1 to m).

2. Driving dynamics control system according to Claim 1, **characterized in that** the control specifications ($\underline{v}$) of the driving dynamics controller (A) consist of physical variables of the longitudinal, lateral and vertical dynamics.

3. Driving dynamics control system according to one of the preceding claims, **characterized in that** the distribution algorithm (C) minimizes the deviation between the control specifications ($\underline{v}$) of the vehicle dynamics controller (A) and the manipulated variables ($\underline{u}$) in order to improve the driving behavior of a motor vehicle both in the normal driving range and in the limit range in terms of driving dynamics.

4. Driving dynamics control system according to Claim 3, **characterized in that** the following system of equations is applied in order to minimize the deviation between the control specifications ($\underline{v}$) and the manipulated variables ($\underline{u}$):

$$\min_{\underline{u}} J = \gamma \| W_v (B\underline{u} - \underline{v}) \| + \| W_u (\underline{u} - \underline{u}_d) \|$$

$$\underline{u}_{min} <= \underline{u} <= \underline{u}_{max} \;\; ; \;\; \dot{\underline{u}}_{min} <= \dot{\underline{u}} <= \dot{\underline{u}}_{max}$$

$$\dim(B) = (m \times n); \dim(\underline{u}) = (m \times 1); \dim(\underline{v}) = (n \times 1)$$

5. Driving dynamics control system according to one of the preceding claims, **characterized in that** the control specification ($\underline{v}$) is a vectorial function $\underline{v} = \underline{g}(\underline{x}, \underline{u})$ of the driving state variables ($\underline{x}$) and the manipulated variables ($\underline{u}$).

6. Driving dynamics control system according to Claim 1, **characterized in that** the matrix (B) is designed as a Jacobi matrix whose entries are formed from partial derivatives of the vectorial function $\underline{g}$, the matrix (B) being determined with the aid of the following relationship:

$$B = \left( \frac{\partial g_i}{\partial u_j} \right)_{i=1,\ldots,n; j=1,\ldots,m} .$$

7. Driving dynamics control system according to one of the preceding claims, **characterized in that** the distribution algorithm (C) for a control specification ($\underline{v}$) consisting of the physical variable of the yaw moment ($M_{zG}$) calculates and distributes an additional steering angle for front wheel steering ($\Delta\delta_v$), an additional steering angle for rear wheel steering ($\Delta\delta_h$), and a distribution parameter ($\lambda$) for dividing the roll support forces between two stabilizers of the chassis operable independently of the driver.

8. Driving dynamics control system according to Claim 7, **characterized in that** the calculation is performed with the aid of a vectorial function $\underline{v} = M_{zG} = \underline{g}(\Delta\delta_v, \Delta\delta_h, \lambda)$.

9. Driving dynamics control system according to one of Claims 1 to 6, **characterized in that** the distribution algorithm (C) for a control specification ($\underline{v}$) consisting of the physical variable of the global longitudinal force ($F_{xG}$), the global lateral force ($Fy_G$) and the global yaw moment ($M_{zG}$) calculates and distributes a steering angle for front wheel steering ($\Delta\delta_v$), a steering angle for rear wheel steering ($\Delta\delta_h$) and individual wheel brake or wheel drive torques ($M_{wheel, vl}$, $M_{wheel, vr}$, $M_{wheel, hl}$, $M_{wheel, hr}$) as well as a distribution parameter ($\lambda$) for dividing the roll support forces between the two stabilizers of the chassis operable independently of the driver.

**Revendications**

1. Système de régulation de la dynamique du roulage de véhicules, présentant
au moins un régulateur (A) de dynamique du roulage auquel sont apportées comme données d'entrée d'une part des consignes ($\underline{w}$) et d'autre part des grandeurs d'état de roulage ($\underline{x}$) et
plusieurs actionneurs asservis ou régulables (1, , m) qui modifient la dynamique du véhicule, par exemple un braquage ajustable indépendamment du conducteur appliqué sur un essieu avant et/ou un essieu arrière du véhicule, un train de roulement ajustable indépendamment du conducteur, un frein ajustable indépendamment du conducteur et un train d'entraînement ajustable indépendamment du conducteur,
le régulateur (A) de dynamique du roulage déterminant à partir des consignes ($\underline{w}$) et des grandeurs d'état de roulage (*x*) une consigne centrale de régulation (*v*) et l'amenant à un algorithme de répartition (C) qui répartit la consigne de régulation (*v*) en grandeurs de réglage (*u*) qui commandent les actionneurs (1, , m),

l'état des actionneurs (1 à m) étant amené à l'algorithme de répartition (C) pour tenir compte du potentiel effectif de réglage et de la vitesse effective de réglage des actionneurs (1 à m) et de leur possible contribution à la conversion des consignes de réglage (*v*) lors de l'établissement des grandeurs de réglage (*u*),

**caractérisé en ce que**

l'algorithme de répartition (C) contient une matrice (B) avec laquelle les grandeurs de réglage (*u*) sont multipliées pour obtenir les consignes de réglage (*v*) et

**en ce que** pour chaque point de travail, la matrice (B) contient le potentiel effectif de réglage des actionneurs (1 à m) pour garantir une répartition optimale des consignes de réglage (v) en les grandeurs de réglage (*u*) des actionneurs (1 à m).

2. Système de régulation de la dynamique du roulage selon la revendication 1, **caractérisé en ce que** les consignes de régulation (*v*) du régulateur (A) de dynamique du roulage sont constituées de grandeurs physiques de la dynamique longitudinale, de la dynamique transversale et de la dynamique verticale.

3. Système de régulation de la dynamique du roulage selon l'une des revendications précédentes, **caractérisé en ce que** l'algorithme de répartition (C) minimise l'écart entre les consignes de réglage (*v*) du régulateur (A) de dynamique du roulage et les grandeurs de réglage (*u*) pour améliorer le comportement de roulage d'un véhicule automobile à la fois en fonctionnement de roulage normal et dans la zone limite de la dynamique du roulage.

4. Système de régulation de la dynamique du roulage selon la revendication 3, **caractérisé en ce que** pour minimiser l'écart entre les consignes de régulation (*v*) et les grandeurs de réglage (*u*), il utilise le système d'équations suivant :

$$\min_{\underline{u}} J = \gamma \parallel W_v (B\underline{u} - \underline{v}) \parallel + \parallel W_u (\underline{u} - \underline{u}_d) \parallel$$

$$\underline{u}_{min} <= \underline{u} <= \underline{u}_{max} \; ; \; \underline{\dot{u}}_{min} <= \underline{\dot{u}} <= \underline{\dot{u}}_{max}$$

$$\dim(B) = (m x n); \dim(\underline{u}) = (m x 1); \dim(\underline{v}) = (n x 1)$$

5. Système de régulation de la dynamique du roulage selon l'une des revendications précédentes, **caractérisé en ce que** la consigne de réglage (*v*) est une fonction vectorielle $\underline{v} = g\,(\underline{x},\,\underline{u})$ des grandeurs d'état de roulage (*x*) et des grandeurs de réglage (*u*).

6. Système de régulation de la dynamique du roulage selon l'une des revendications précédentes, **caractérisé en ce que** la matrice (B) est configurée comme matrice de Jacobi dont les entrées sont formées de dérivées partielles de la fonction vectorielle *g*, la matrice (B) étant déterminée à l'aide de l'équation suivante :

$$B = \left( \frac{\partial g_i}{\partial u_j} \right)_{i=1,\ldots,n; j=1,\ldots,m}$$

7. Système de régulation de la dynamique du roulage selon l'une des revendications précédentes, **caractérisé en ce que** l'algorithme de répartition (C) calcule et répartit pour une consigne de régulation (*v*) constituée des grandeurs physiques que sont le couple de lacet ($M_{zG}$), un angle supplémentaire de braquage de la direction des roues avant ($\Delta\delta_v$), un angle supplémentaire de braquage d'une direction des roues arrière ($\Delta\delta_h$) ainsi qu'un paramètre de répartition ($\lambda$) de la répartition des forces de soutien de roulis sur deux moyens de stabilisation du train de roulage actionnés indépendamment du conducteur.

8. Système de régulation de la dynamique du roulage selon la revendication 7, **caractérisé en ce que** le calcul s'effectue à l'aide d'une fonction vectorielle

$$\underline{v} = M_{zG} = \underline{g}\,(\varDelta\delta_v,\ \varDelta\delta_h,\ \lambda)\,.$$

9. Système de régulation de la dynamique du roulage selon l'une des revendications 1 à 6, **caractérisé en ce que** l'algorithme de répartition (C) calcule et répartit pour une consigne de régulation *(v)* constituée des grandeurs physiques que sont la force longitudinale globale ($F_{xG}$), la force transversale globale ($F_{yG}$) et le couple de lacet global ($M_{zG}$) un angle de braquage pour la direction des roues avant ($\Delta\delta_v$), un angle de braquage pour la direction des roues arrière ($\Delta\delta_h$) et des couples individuels de frein de roue ($M_{Rad,\,vl}$, $M_{Rad,\,Vr}$, $M_{Rad,\,hl}$, $M_{Rad,\,hr}$) ainsi qu'un paramètre de répartition ($\lambda$) de la répartition des forces de soutien de roulis sur les deux moyens de stabilisation du train de roulement actionné indépendamment du conducteur.

**Fig. 1**

Fig. 2

Fig. 3

Seitenkraft-Schräglaufwinkel

EP 2 334 527 B1

**Fig. 4**

Fahrzeugzustand

Reifenmodell

Reibwert, Aufstandskraft

B

$\underline{v}$

$\underline{u}$

Verteilungsalgorithmus
C

Aufrufende
Funktion

$W_v$

Aktuatorkonfiguration

$W_u$

Aufrufende Funktion

Komfortparameter

$$\underline{u}_{min} \leq \underline{u} \leq \underline{u}_{max}$$

$$\underline{\dot{u}}_{min} \leq \underline{\dot{u}} \leq \underline{\dot{u}}_{max}$$

Aktuatortyp

Reibwert, Aufstandskraft

Leistungsgrenzen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10226683 A1
- WO 2004101337 A1